# EUROPÄISCHE PATENTSCHRIFT

(11) **EP 3 368 395 B1**
(45) Veröffentlichungstag und Bekanntmachung des Hinweises auf die Patenterteilung: **30.10.2019**
(21) Anmeldenummer: 16766908.4
(22) Anmeldetag: 12.09.2016
(51) Int. Cl.: B62D 7/06, B62D 7/18, B60G 3/20, B60G 7/00

(54) **RADAUFHÄNGUNG EINES LENKBAREN RADES EINES ZWEISPURIGEN FAHRZEUGS**
WHEEL SUSPENSION ARRANGEMENT OF A STEERABLE WHEEL OF A TWO-TRACK VEHICLE
SUSPENSION DE ROUE D'UNE ROUE DIRIGEABLE D'UN VÉHICULE À DEUX VOIES

(30) Priorität: 29.10.2015 DE 102015221217; 22.03.2016 DE 102016204767
(43) Veröffentlichungstag der Anmeldung: 05.09.2018
(73) Patentinhaber: Bayerische Motoren Werke Aktiengesellschaft, 80809 München (DE)
(72) Erfinder: DURKOVIC, Martin, 81929 München (DE)
(86) Internationale Anmeldenummer: PCT/EP2016/071462
(87) Internationale Veröffentlichungsnummer: WO 2017/071865

(56) Entgegenhaltungen:
- DE-A1- 19 717 069
- DE-A1-102012 110 463
- JP-A- H 037 609
- JP-A- 2006 117 044

## Beschreibung

Die Erfindung betrifft eine Radaufhängung eines lenkbaren Rades eines zweispurigen Fahrzeugs nach dem Oberbegriff des Anspruchs 1 Zum Stand der Technik neben der DE 197 17 069 A1 und der DE 10 2012 110 463 A1 insbesondere auf die zur Bildung des Oberbegriffs herangezogene JP H03 7609 A verwiesen.

Was die Achsschenkellenkung an der Vorderachse zweispuriger Fahrzeuge betrifft, so ist die Ackermannbedingung dem Fachmann allgemein bekannt. Bekannt ist auch, dass die Ackermannbedingung mit Hilfe eines geeignet ausgelegten Lenktrapezes, gebildet aus der Achse der lenkbaren Räder und der Spurstange und den radträgerseitigen Spurhebeln, dann besser eingehalten werden kann bzw. die tatsächliche Lenkkinematik besser an die theoretisch erforderliche Ackermannbedingung angepasst werden kann, wenn sich in Fahrtrichtung des Fahrzeugs betrachtet die Spurstange hinter Radmitte befindet. Dies kann jedoch wegen beengter Einbauverhältnisse im Fahrzeug-Vorderbau oftmals nicht dargestellt werden. Ist das Rad weiterhin durch einen nicht aufgelösten unteren Lenkerverbund (bspw. bzw. insbesondere einen sog. Dreieckslenker) geführt, so dass auch signifikante Einschränkungen hinsichtlich der konstruktiv möglichen Positionierung der Spreizachse, d.h. der Lenkdrehachse bestehen, so ist es besonders schwierig bis unmöglich, ein der Ackermannbedingung gewünscht nahe kommendes Lenktrapez darzustellen.

Beim nächstkommenden Stand der Technik (JP H03 7609 A) wird versucht, mit einem Zwischenglied zwischen der Spurstange und dem Spurhebel des Radträgers auf mechanischem Weise die Lenkübersetzung vom Einfederweg des Rades abhängig zu machen. Mit einer besseren Darstellung der Ackermannbedingung beschäftigt sich diese Schrift nicht. Gleiches gilt für die eingangs weiterhin genannte DE 10 2012 110 463 A1, welche sich mit der Höhe des Wankzentrums beschäftigt.

Mit der vorliegenden Erfindung soll aufgezeigt werden, wie insbesondere auch mit einer in Fzg.-Fahrtrichtung betrachtet vor Radmitte liegenden Spurstange die Ackermannbedingung verbessert eingehalten werden kann, d.h. wie das Lenktrapez so ausgelegt oder gestaltet werden kann, dass die Ackermannbedingung besser als im derzeitigen Stand der Technik erfüllt wird (= Aufgabe der vorliegenden Erfindung).

Die Lösung dieser Aufgabe ergibt sich mit den Merkmalen des Anspruchs 1 und ist für eine Radaufhängung nach dem Oberbegriff des Anspruchs 1 dadurch gekennzeichnet, dass die Drehachse des (besagten) Zwischenglieds in der genannten aufgespannten Ebene betrachtet derart gegenüber der Fahrzeug-Hochachse geneigt ist, dass die Anlenkung des Spurhebels am Zwischenglied in Fahrzeug-Querrichtung betrachtet näher bei der Fahrzeug-Mittenebene liegt als der Schnittpunkt der Drehachse des Zwischenglieds mit einer den fahrzeugaufbauseitigen Anlenkpunkt der Spurstange sowie das Zentrum des Gelenks zwischen der Spurstange und dem Zwischenglied durchlaufenden Geraden. Vorteilhafte Aus- und Weiterbildungen sind Inhalt der Unteransprüche; ferner sei ausdrücklich erwähnt, dass die oben genannte Neigung einer aufgespannten Ebene gegenüber der Fahrzeug-Hochachse im Winkel-Bereich von +/- 45° auch die exakt vertikale Ausrichtung dieser Ebene umfasst.

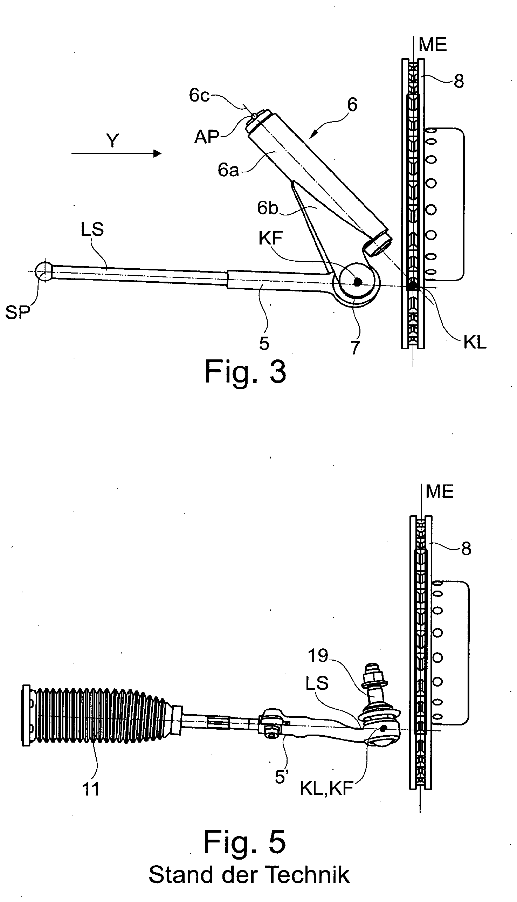

Erfindungsgemäß ist ein hier sog. Zwischenglied zwischen der Spurstange und zumindest einem Spurhebel des Radträgers vorgesehen, mit Hilfe dessen ein Kinematikpunkt, welcher für die Lenkkinematik und somit für die bestmögliche Annäherung an die Ackermannbedingung eine große Rolle spielt, in Fahrzeug-Querrichtung betrachtet weiter nach außen gelegt werden kann, als dies bislang möglich war. Konkret ergibt sich dieser Kinematikpunkt aus dem erfindungsgemäß nur noch indirekten Zusammenwirken der Spurstange mit dem Spurhebel des Radträgers unter Zwischenschaltung des erfindungsgemäßen Zwischenglieds, welches Zusammenwirken mithilfe dieses erfindungsgemäßen Zwischenglieds durch einen virtuellen Kinematikpunkt definiert ist, der nahezu beliebig platziert und bspw. auch in eine Ebene einer am Radträger befestigten Bremsscheibe gelegt werden kann, was ohne ein solches Zwischenglied wegen Bauteil-Kollision selbstverständlich nicht möglich ist. Besser verständlich wird dies anhand der weiteren Beschreibung eines ersten Ausführungsbeispiels, und zwar insbesondere anhand von Fig. 3 desselben (im Vergleich mit Fig.5 als Stand der Technik).

Daher wird im Weiteren bereits ein erstes und ein zweites Ausführungsbeispiel beschrieben, wobei die weiteren beschriebenen Merkmale und Vorteile selbstverständlich von allgemeiner Gültigkeit und Relevanz sind, auch wenn die entsprechenden Merkmale und Vorteile nicht (wie üblich) vor der der nun folgenden Figurenbeschreibung erläutert werden. Auch bedeutet die Beschreibung der Erfindung anhand von Ausführungsbeispielen jeweils in Form einer Doppelquerlenkerachse keineswegs eine Beschränkung der Patentansprüche. Insbesondere ist die vorliegende Erfindung auch an anderen Achskonstruktionen mit lenkbaren Rädern darstellbar, so bspw. an einer Federbeinachse und sogar an einer Starrachse.

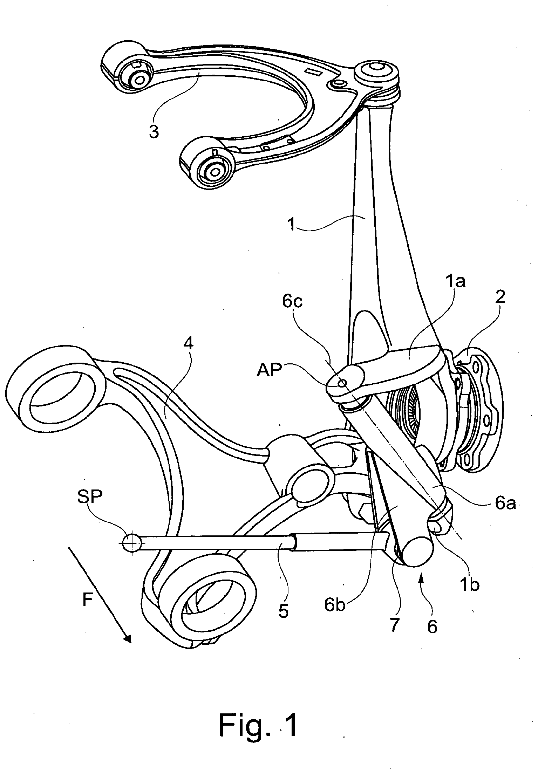

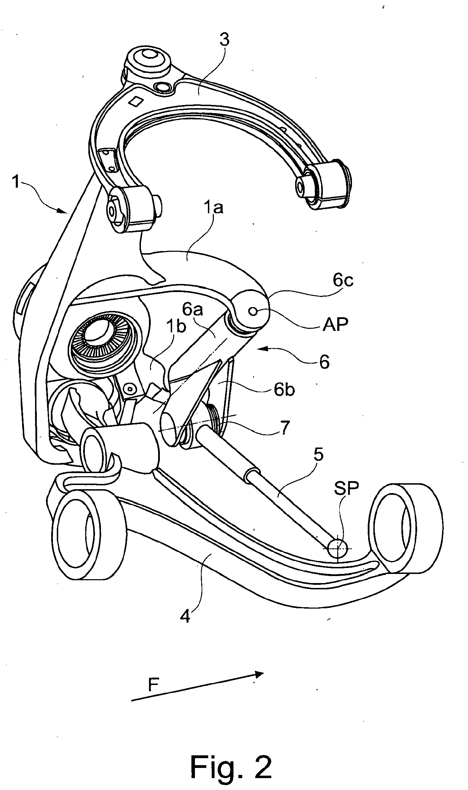

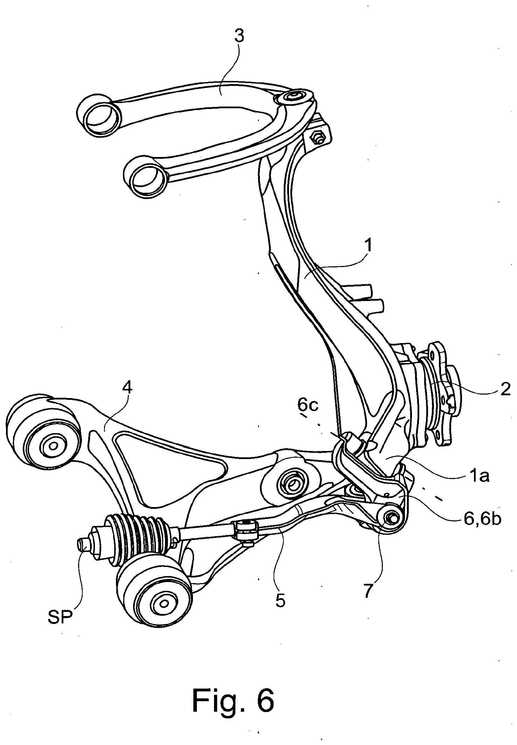

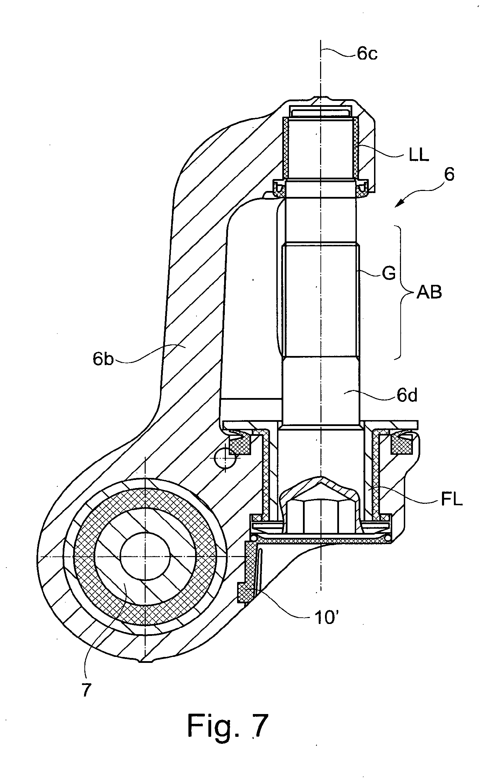

Zum ersten Ausführungsbeispiel gehören die beigefügten Figuren 1 - 5, während in den Figuren 6 und 7 ein zweites Ausführungsbeispiel dargestellt ist. Im einzelnen zeigt **Figur 1** in räumlicher Darstellung eine erfindungsgemäße Radaufhängung eines linken lenkbaren Vorderrads eines Personenkraftwagens in einer ersten Ansicht im Wesentlichen von vorne betrachtet und **Figur 2** diese Radaufhängung im Wesentlichen von der Fahrzeug-Mittenebene aus betrachtet bei Blickrichtung nach außen (in Fzg.-Querrichtung) leicht schräg von hinten nach vorne mit geringer Neigung nach unten zur Fahrbahn hin. Dabei ist die Fahrtrichtung des Fahrzeugs durch einen Pfeil F dargestellt.

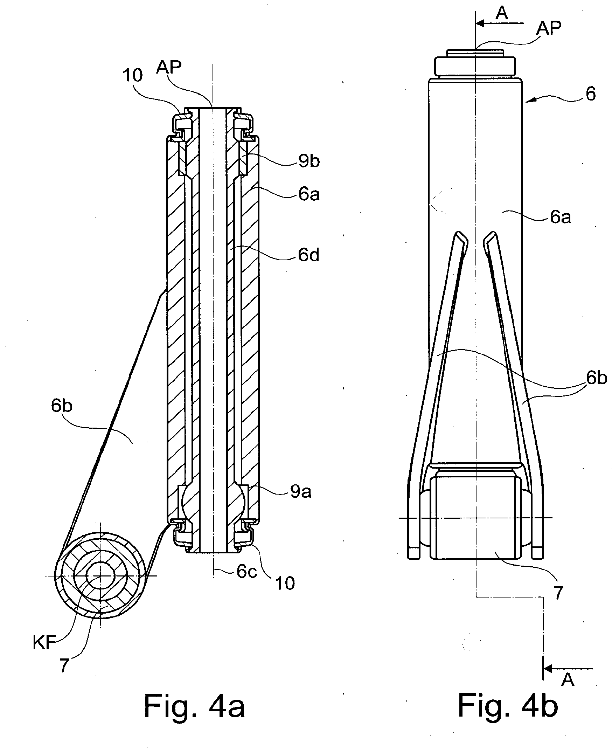

**Figur 3** zeigt nur für deren Erläuterung wesentliche Elemente aus den Figuren 1, 2 in einer Ansicht von vorne in Fzg.-Längsrichtung (nach hinten) betrachtet und **Figur 5** eine ähnliche Darstellung wie Figur 3 für den Stand der Technik. In den **Figuren 4a, 4b** schließlich ist lediglich ein bzw. das Zwischenglied (aus den Figuren 1 - 3) in Fig.4a im Schnitt bei Blickrichtung in Fzg.-Längsrichtung von vorne und in Fig.4b in Ansicht bei Blickrichtung in Fzg.-Querrichtung nach außen dargestellt.

Vom zweiten Ausführungsbeispiel zeigt **Figur 6** eine der Fig.1 ähnliche Ansicht, während **Figur 7** nur das Zwischenglied aus Fig.6 im Schnitt zeigt.

Zunächst auf die **Figuren 1****,** **2** Bezug nehmend ist mit der Bezugsziffer 1 ein Radträger bzw. Schwenklager gekennzeichnet, an dem ein in Fig.1 sichtbares Radlager 2 befestigt ist, an dem ein nicht dargestelltes Rad um seine Drehachse drehbar befestigt werden kann. An seinem oberen Ende ist ein Dreieckslenker 3 um die (nicht gezeigte) Spreizachse drehbar am Radträger 1 befestigt, welcher mit seinen anderen Enden wie üblich um die Fzg.-Längsachse schwenkbar - um Ein- und Ausfederbewegungen des Rades gegenüber dem (nicht gezeigten) Fahrzeug-Aufbau zu ermöglichen - am Fahrzeug-Aufbau befestigt ist. Ein weiterer Dreieckslenker 4 ist im unteren Endbereich des Radträgers 1 vorgesehen, wobei dessen detaillierte (verdrehbare) Anbindung an den Radträger 1 einerseits und an den Fahrzeug-Aufbau bzw. an einen Fahrschemel oder dgl. andererseits der besseren Übersichtlichkeit wegen nicht gezeigt ist, jedoch ist dies wie üblich gestaltet. Schließlich ist zur Bindung des nach der Führung durch die beiden Dreieckslenker 3, 4 verbleibenden Drehfreiheitsgrades des Radträgers 1 um die Spreizachse (= Lenkdrehachse) wie grundsätzlich eine Spurstange 5 vorgesehen. Diese erstreckt sich im Wesentlichen in Fzg.-Querrichtung und ist mittels eines Lenkgetriebes in dieser Richtung wie üblich verlagerbar, wobei das dem (jeweiligen) Radträger 1 abgewandte Ende der jeweiligen - nämlich im Fahrzeug linksseitigen und rechtsseitigen - Spurstange 5 mit dem Lenkgetriebe (bspw. einer Zahnstange derselben) verbunden ist. Mit diesem dem Radträger 1 abgewandte Ende ist die Spurstange 5 somit (wie üblich) in Richtung der Fahrzeug-Hochachse sowie in Richtung der Fahrzeug-Längsachse betrachtet praktisch fest mit dem Fahrzeugaufbau verbunden, wenngleich selbstverständlich eine vom genannten Lenkgetriebe initiierte Verlagerung der Spurstange 5 in Fzg-Querrichtung möglich ist, um eine Lenkbewegung oder Verschwenkbewegung des jeweiligen Radträgers 1 um die Lenkdrehachse zu ermöglichen. Daher wird vorliegend dieses dem Radträger 1 abgewandte Ende der Spurstange 5 als fahrzeugaufbauseitiger Anlenkpunkt SP der Spurstange 5 bezeichnet.

Anders als im üblichen Stand der Technik, bei welchem das dem Radträger 1 zugewandte Ende der Spurstange 5 an einem starr am Radträger 1 vorgesehenen und im Hinblick auf ein gewünschtes (und dem Fachmann bekanntes "Lenktrapez") geeignet geformten Spurhebel 1a gelenkig befestigt ist, ist vorliegend in der Bewegungsübertragungskette zwischen der Spurstange 5 und dem Radträger 1 bzw. dessen Spurhebel, von welchem hier beim ersten Ausführungsbeispiel in Vertikalrichtung in unterschiedlicher Höhe liegend zwei, nämlich ein spurstangennaher Spurhebel 1b und ein spurstangenferner Spurhebel 1a vorgesehen sind, ein Zwischenglied 6 vorgesehen. Dieses hier ein zylindrisches Gehäuse 6a und einen daran befestigten Lagerbock 6b aufweisende Zwischenglied 6 ist über seinen Lagerbock 6b über ein Gelenk 7 mit dem radträgerseitigen Endabschnitt der Spurstange 5 verbunden. Dieses nach Art eines Gummilagers mit einer vorzugsweise parallel zur Fzg.-Längsachse verlaufenden Drehachse ausgebildete Gelenk 7 ermöglicht (vertikale) Ein- und Ausfederbewegungen des Radträgers 1 gegenüber dem Fahrzeug-Aufbau bzw. gegenüber dem fahrzeugaufbauseitigen Anlenkpunkt SP der der Spurstange 5, welcher ja - wie bereits ausgeführt wurde - in Vertikalrichtung betrachtet quasi fahrzeugaufbaufest ist.

Das erfindungsgemäße Zwischenglied 6 ist vorliegend (beim ersten Ausführungsbeispiel) zwischen zwei Spurhebeln 1a, 1b angeordnet, welche jeweils starr mit dem Radträger 1 verbunden sind. Der dem Gelenk 7 zugewandte Endabschnitt des Zwischenglieds 6 ist am spurstangennahen Spurhebel 1b solchermaßen befestigt und der dem Gelenk 7 gegenüberliegende Endabschnitt des Zwischenglieds 6 ist am spurstangenfernen Spurhebel 1a des Radträgers 1 solchermaßen befestigt, dass das über das Gelenk 7 mit der Spurstange 5 verbundene Gehäuse 6a des Zwischenglieds 6 mit einer durch dieses verlaufenden bzw. gebildeten Drehachse 6c gegenüber den Spurhebeln 1a, 1b verdrehbar ist. Konkret ist hierfür - wie Fig.4a zeigt - im hohlzylindrischen Gehäuse 6a ein im Wesentlichen kreiszylindrischer Übertragungsschaft 6d des Zwischenglieds 6 um die durch die jeweiligen Zylinderachsen (des Gehäuses 6a und des Übertragungsschafts 6d) gebildete Drehachse 6c verdrehbar gelagert, wobei dieser Übertragungsschaft 6d mit den Spurhebeln 1a, 1b fest verbunden ist. So ist der mit seinem in den (bzw. sämtlichen) Figuren oben liegende und aus dem Gehäuse 6a herausragende Übertragungsschaft 6d in einem ersten Anlenkpunkt APa starr mit dem Spurhebel 1a des Radträgers 1 verbunden, und in analoger Weise ist das in den Figuren untere Ende des Übertragungsschaftes 6d in einem zweiten Anlenkpunkt APb mit dem Spurhebel 1b verbunden. Der gesamte Abschnitt des Übertragungsschaftes 6d zwischen den beiden Anlenkpunkten APa und APb kann als drehbare Anlenkung AB oder drehbarer Anlenkbereich AB des Spurhebels oder hier der Spurhebel 1a, 1b am Zwischenglied 6 bezeichnet werden, über welchen der oder die Spurhebel 1a, 1b um die Drehachse 6c des Zwischenglieds 6 drehbar mit dem Zwischenglied 6 verbunden ist bzw. sind. Im Übrigen ist es (auch bei diesem Ausführungsbeispiel) nicht zwangsweise erforderlich, zwei Spurhebel 1a, 1b vorzusehen; vielmehr erfolgt dies vorliegend nur aus Festigkeitsgründen. Bei geeigneter Dimensionierung beispielsweise der Verbindung des Übertragungsschaftes 6d mit dem spurstangenfernen Spurhebel 1a im Anlenkpunkt APa kann es auch ausreichend sein, nur diese einzige Verbindung zwischen dem dann einzigen Spurhebel 1a und dem Übertragungsschaft 6d (bzw. allgemein dem Zwischenglied 6) vorzusehen.

Nun auf **Figur 3** Bezug nehmend ist hierin für das erste Ausführungsbeispiel anstelle des Radträgers 1 und dessen Radlager 2 eine Bremsscheibe 8 gezeigt, die am Radlager 2 wie üblich befestigt ist und bei montiertem Rad innerhalb dessen sog. Radschüssel liegt. In dieser Figur 3 dargestellt ist ferner die Spurstange 5 sowie das über das Gelenk 7, dessen Drehachse im Punkt KF senkrecht zur Zeichenebene sowie im Wesentlichen in FahrzeugLängsrichtung verläuft, mit dieser gelenkig verbundene Zwischenglied 6. Die bereits erläuterte Drehachse 6c des Zwischenglieds 6 schneidet wie ersichtlich die Längsachse LS der vorliegend geradlinig exakt in Fahrzeug-Querrichtung verlaufenden Spurstange 5 in einem Punkt KL, welcher hier annähernd in der Mitten-Ebene ME der Bremsscheibe 8 liegt. Bei diesem Punkt KL handelt es sich nun um den (vor der Figurenbeschreibung bereits genannten) virtuellen Kinematikpunkt KL für Lenkbewegungen bzw. Verschwenkbewegungen des Radträgers 1 um die bereits genannte Lenkdrehachse (Spreizachse) der Radaufhängung (in deren Konstruktionslage). Mit einer solchen wie figürlich gezeigten Position des (virtuellen) Kinematikpunktes KL kann insbesondere im Falle einer wie hier in Fahrtrichtung F betrachtet vor Radmitte liegenden Spurstange 5 ein Lenktrapez dargestellt werden, welches sich äußerst gut an die Ackermannbedingung annähert. Beim weiteren in dieser Figur 3 gezeigten Kinematikpunkt KF handelt es sich im Übrigen um den für Ein- und Ausfederbewegungen des Radträgers 1 gegenüber dem Fzg.-Aufbau relevanten Kinematikpunkt (in Konstruktionslage der Radaufhängung). Ergänzend sei darauf hingewiesen, dass die Spurstange 5 abweichend von der Figurendarstellung bspw. auch gebogen verlaufen kann, so dass dann keine eigentliche Spurstangen-Längsachse existiert. Geometrisch exakt beschrieben ergibt sich daher der virtuelle Kinematikpunkt KL für Lenkbewegungen bzw. Verschwenkbewegungen des Radträgers 1 als Schnittpunkt der Drehachse 6c des Zwischenglieds 6 mit einer Geraden LS, welche den fahrzeugaufbauseitigen Anlenkpunkt SP der Spurstange 5 sowie das Zentrum des besagten Gelenks 7 zwischen der Spurstange 5 und dem Zwischenglied 6 durchläuft.

**Figur 5** zeigt in einer Darstellung analog Fig.3 den herkömmlichen Stand der Technik. Im üblichen Stand der Technik ist das radträgerseitige Ende der Spurstange 5' - diese ist in Fig.5 kürzer als diejenige von Fig.3, weil in Fig.5 wie ersichtlich noch ein Endabschnitt der in ihrem weiteren Verlauf innerhalb eines figürlich gezeigten Faltenbalgs 11 liegenden Zahnstange eines nahe der Fzg.-Mittenebene angeordneten Lenkgetriebes gezeigt ist - über einen Kugelgelenkzapfen 19 mit dem (in dieser Figur 5 nicht gezeigten) einzigen Spurhebel des Radträgers verbunden. Beim Stand der Technik fallen somit die im Zusammenhang mit Fig.3 erläuterten Kinematikpunkte KL und KF im Gelenkzentrum des Kugelgelenkzapfens 19 zusammen. Damit liegt wie ersichtlich der lenkungsrelevante Kinematikpunkt KL in Fahrzeug-Querrichtung betrachtet weiter innen, d.h. näher zur Fahrzeug-Mittenebene, als beim Ausführungsbeispiel gemäß Fig.5, wo dieser dort virtuelle Kinematikpunkt KL in Fzg.-Querrichtung betrachtet weiter außen (d.h. in der Figur weiter rechts) liegt.

Mit in Fzg.-Querrichtung weiter außen liegendem lenkungsrelevanten Kinematikpunkt KL (gemäß Fig.3 im Vergleich mit Fig.5) ist offensichtlich ein in einer (nicht figürlich dargestellten) senkrechen Projektion auf die Fahrbahn von der Längsachse LS der Spurstange 5 (bzw. allgemein der besagten Geraden LS zwischen dem fahrzeugaufbauseitigen Anlenkpunkt SP der Spurstange 5 und dem Zentrum des Gelenks 7) und einer Verbindungslinie zwischen dem Kinematikpunkt KL und dem Durchstoßpunkt der Lenkdrehachse durch die Fahrbahn eingeschlossener Winkel kleiner als wenn der Kinematikpunkt KL näher bei der Fzg.-Mittenebene liegt. Je kleiner dieser vorstehend genannte Winkel ist, desto besser kann mit einem vernünftig ausgelegten Lenktrapez die Ackermannbedingung eingehalten werden. Um nun mithilfe des erfindungsgemäßen Zwischenglieds 6 einen (in Fzg.-Querrichtung betrachtet) weiter außen liegenden virtuellen lenkungsrelevanten Kinematikpunkt KL zu erhalten, ist die Drehachse 6c des Zwischengliedes gegenüber der Fahrzeug-Hochachse - diese verläuft bei Figur 3 senkrecht zur Spurstangen-Längsachse LS bzw. zur besagten Geraden LS sowie parallel zur bereits genannten Mittenebene ME der Bremsscheibe 8 in der Zeichenebene - in einer von der Drehachse 6c sowie der besagten Geraden LS aufgespannten Ebene betrachtet geneigt, und zwar vorzugsweise um einen Winkel in der Größenordnung von 30° bis 80°. Die Neigungsrichtung ist dabei solchermaßen, dass die Anlenkung AB (bzw. hier die beiden Anlenkpunkte APa und APb) der Spurhebel 1a, 1b am Zwischenglied 6 bzw. an dessen Übertragungsschaft 6d in Fahrzeug-Querrichtung betrachtet näher bei der Fahrzeug-Längs-Mittenebene (und somit in Figur 3 weiter links) liegt als der Schnittpunkt KL der Drehachse 6c des Zwischenglieds 6 mit der besagten Geraden LS bzw. der Längsachse LS der Spurstange 5. (Die Fahrzeug-Längs-Mittenebene liegt als Vertikale in Fig.3 sowie als annähernd Vertikale in Fig.1 jeweils links außerhalb des Zeichenbereichs).

Im Übrigen spannt die Drehachse 6c des Zwischenglieds 6 zusammen mit dem fahrzeugaufbauseitigen Anlenkpunkt SP der Spurstange 5 eine Ebene auf, welche vorliegend annähernd vertikal ausgerichtet ist. Letzteres ist aber kein obligatorisches Merkmal. Vielmehr ist der erfindungsgemäße Effekt auch erzielbar, wenn die vom fahrzeugaufbauseitigen Anlenkpunkt SP der Spurstange 5 und der Drehachse 6c des Zwischenglieds 6 definierte Ebene gegenüber der Vertikalen (bzw. der Fahrzeug-Hochachse) geneigt ist. Abhängig von den jeweiligen Bauraumverhältnissen können solche Neigungswinkel in der Größenordnung von bis zu plus/minus 45° gegenüber der Vertikalen (d.h. bei bspw. Fig.3 nach vorne oder nach hinten geneigt) gut darstellbar sein. Der entsprechende Neigungswinkel der besagten Ebene kann also im Wesentlichen zwischen 45° in Fzg.-Fahrtrichtung nach vorne und 45° gegen Fzg.-Fahrtrichtung nach hinten liegen.

Im Übrigen ist der erfindungsgemäße Effekt auch dann erzielbar bzw. es gilt die vorstehende Erläuterung gleichermaßen dann, wenn die Spurstange (5) in Richtung der Fahrzeug-Hochachse betrachtet relativ weit oben liegend, bspw. geringfügig unterhalb des oberen Dreieckslenkers 3 angeordnet ist. Dann empfiehlt es sich jedoch die Anordnung des Zwischengliedes 6 quasi an einer zumindest annähernd horizontal in Fzg.-Querrichtung bspw. in Höhe des Punktes AP1 in Fig.1 verlaufenden Achse zu spiegeln, so dass dann der vorliegende spurstangennahe Spurhebel (1b) in Richtung der Fahrzeug-Hochachse betrachtet höher läge als der spurstangenferne Spurhebel (1a).

Nunmehr auf die **Figuren 4a, 4b** Bezug nehmend ist hierin das Zwischenglied 6 aus den Figuren 1 - 3 als solches dargestellt. Figur 4b zeigt die Ansicht Y aus Fig.3 ohne Spurstange und lässt neben dem Gehäuse 6a insbesondere den Lagerbock 6b mit eingesetztem Gummilager, welches das (in Zusammenhang mit den Figuren 1, 2 genannte) Gelenk 7 bildet, und für welches ebenfalls die Bezugsziffer 7 verwendet wird, erkennen. Ein besonderer Vorteil eines solchen Gummilagers 7 liegt in der zusätzlichen akustischen Entkopplung zwischen dem Radträger 1 und der Spurstange 5 und somit dem am Fzg.-Aufbau angeflanschten Lenkgetriebe.

Figur 4a zeigt den Schnitt A-A aus Fig.4b und lässt den detaillierten Aufbau dieses Zwischenglieds 6 erkennen. Demnach besteht dieses neben dem hohlzylindrischen Gehäuse 6a und dem dieses tragenden Lagerbock 6b aus einem bereits genannten im wesentlichen kreiszylindrischen Übertragungsschaft 6d, der im Innenraum des Gehäuses 6a um die gemeinsame Zylinderachse, welche die besagte Drehachse 6c des Zwischenglieds 6 ist, drehbar gelagert ist. Hierfür sind in den Endabschnitten des Gehäuses 6a geeignete Lager 9a, 9b vorgesehen, von denen das hier untere Lager 9a den in diesem Bereich ballig geformten Übertragungsschaft 6d in Richtung der Drehachse 6c betrachtet fixiert. Gegenüber Verschmutzung oder dgl. sind diese Lager 9a, 9b jeweils durch einen am Gehäuse 6a außenliegenden Gummibalg 10 geschützt. Nicht explizit dargestellt ist, wie die Spurhebel 1a, 1b des Radträgers 1 an den beiden aus dem Gehäuse 6a herausragenden Endabschnitten des Übertragungsschafts 6d befestigt sind, jedoch kann dies bspw. über eine Verschraubung oder stoffschlüssig ausgeführt sein.

Nunmehr auf zweite Ausführungsbeispiel sowie die **Figuren 6****,** **7** Bezug nehmend sind hierin gleiche bzw. funktionsgleiche Elemente mit den gleichen Bezeichnungen und Bezugsziffern wie beim ersten Ausführungsbeispiel versehen. Hier ist (vgl. Fig.6) am Radträger 1 nur ein einziger mit diesem fest verbundener Spurhebel 1a vorgesehen, welcher von einem Lagerbock 6b des Zwischenglieds 6 quasi umgriffen wird. In diesem für das Umgreifen im weitesten Sinne C-förmig gestalteten Lagerbock 6b des Zwischenglieds 6 ist nicht nur das Gelenk 7 zur Verbindung mit der Spurstange 5 vorgesehen, sondern es ist in diesem Lagerbock 6b quasi zwischen dessen beiden freien Enden (des Buchstabens "C") der (abermals) kreiszylindrische Übertragungsschaft 6d mit seinen beiden Enden um seine Zylinderachse, welche die Drehachse 6c des Zwischenglieds 6 ist, verdrehbar gelagert. Der nur in Fig.7 sichtbare Übertragungsschaft 6d ist (wiederrum) mit dem Spurhebel 1 in einem sog. Anlenkbereich AB (= Anlenkung AB) verbunden.

Konkret weist - wie Fig.7 zeigt - der Übertragungsschaft 6d in seinem im wesentlichen mittigen Anlenkbereich AB ein Außengewinde G auf, über welches er geeignet mit dem Spurhebel 1a bzw. mit einer an diesem starr befestigten (nicht sichtbaren) Gewindemutter verschraubt ist. Aus Festigkeitsgründen durchdringt der Übertragungsschaft 6d dabei eine Aufnahme-Durchtrittsöffnung (nicht gezeigt) im Spurhebel 1a. Über ein (in Fig.7 sowie im Einbauzustand) unteres Festlager FL sowie ein oberes Loslager LL ist der Übertragungsschaft 6d in den beiden "Armen" des Lagerbocks 6b gegenüber diesem um die Drehachse 6c verdrehbar gelagert. Auch hier ist am unteren Festlager FL eine Abdichtkappe 10' gegen Verschmutzung vorgesehen.

## Patentansprüche

1. Radaufhängung eines lenkbaren Rades eines zweispurigen Fahrzeugs, mit einem Radträger (1), welcher gegenüber dem Fahrzeug-Aufbau um eine Lenkdrehachse verschwenkbar geführt und durch Verlagerung einer über einen Spurhebel (1a, 1b) des Radträgers (1) mit diesem wirkverbundenen und zumindest annähernd in Fahrzeug-Querrichtung ausgerichteten Spurstange (5) um die Lenkdrehachse verschwenkbar ist,
wobei der dem Radträger (1) zugewandte Endabschnitt der Spurstange (5) über ein eine vertikale Ein-und Ausfederbewegung des Radträgers (1) gegenüber dem Fahrzeug-Aufbau erlaubendes Gelenk (7) mit einem eine Drehachse (6c) bildenden Zwischenglied (6) verbunden ist, welche Drehachse (6c) mit dem fahrzeugaufbauseitigen Anlenkpunkt (SP) der Spurstange (5) eine Ebene aufspannt, die gegenüber der Fahrzeug-Hochachse um einen Winkel im Bereich zwischen +/- 45° geneigt ist, und wobei der Spurhebel (1a, 1b) vom genannten Gelenk (7) beabstandet (1a, 1b) um die genannte Drehachse (6c) verdrehbar am Zwischenglied (6) befestigt ist
**dadurch gekennzeichnet, dass** die Drehachse (6c) des Zwischenglieds (6) in der genannten aufgespannten Ebene betrachtet derart gegenüber der Fahrzeug-Hochachse geneigt ist, dass die Anlenkung (APa, APb, AB) des Spurhebels (1a, 1b) am Zwischenglied (6) in Fahrzeug-Querrichtung betrachtet näher bei der Fahrzeug-Mittenebene liegt als der Schnittpunkt (KL) der Drehachse (6c) des Zwischenglieds (6) mit einer den fahrzeugaufbauseitigen Anlenkpunkt (SP) der Spurstange (5) sowie das Zentrum des Gelenks (7) zwischen der Spurstange (5) und dem Zwischenglied (6) durchlaufenden Geraden.

2. Radaufhängung nach Anspruch 1, wobei die Drehachse (6c) des Zwischenglieds (6) in der genannten aufgespannten Ebene betrachtet um einen Winkel in der Größenordnung von 30° bis 80° gegenüber der Fahrzeug-Hochachse geneigt ist.

3. Radaufhängung nach Anspruch 1 oder 2, wobei das Zwischenglied (6) über zwei Spurhebel (1a, 1b) in gegenüber diesen verdrehbarer Weise mit dem Radträger (1) verbunden ist.

4. Radaufhängung nach Anspruch 3, wobei das Zwischenglied (6) ein hohlzylinderartiges Gehäuse (6a) mit einem die besagte Drehachse (6c) beschreibenden Übertragungsschaft (6d) aufweist, der mit dem Spurhebel (1a, 1b) des Radträgers (1) verbunden ist.

5. Radaufhängung nach Anspruch 1 oder 2, wobei ein das Gelenk (7) zwischen der Spurstange (5) und dem Zwischenglied (6) aufweisender Lagerbock (6b) des Zwischenglieds (6) den Spurhebel (1a) umgreift und einen mit dem Spurhebel (1a) verbundenen und die besagte Drehachse (6c) beschreibenden Übertragungsschaft (6d) trägt.

6. Radaufhängung nach einem der vorangegangenen Ansprüche, wobei der Radträger (1) durch zumindest einen radführenden Lenker (3, 4) geführt ist.

## Claims

1. A wheel suspension of a steerable wheel of a two-track vehicle, having a wheel carrier (1) which is guided relative to the vehicle body so as to be pivotable about a steering axis of rotation and is pivotable about the steering axis of rotation by displacement of a tie rod (5), which is operatively connected to the wheel carrier(1) via a steering arm (1a, 1b) of said wheel carrier and is oriented at least approximately in the vehicle transverse direction,
wherein that end portion of the tie rod (5) which faces toward the wheel carrier (1) is connected by means of a joint (7), which permits a vertical spring-compression and spring-extension movement of the wheel carrier (1) relative to the vehicle body, to an intermediate member (6) which forms an axis of rotation (6c), which axis of rotation (6c) spans, with the vehicle-body-side articulation point (SP) of the tie rod (5), a plane which is inclined relative to the vehicle vertical axis by an angle in the range between +/- 45é, and wherein the steering arm (1a, 1b) is fastened to the intermediate member (6) so as to be spaced apart from said joint (7) and so as to be rotatable about said axis of rotation (6c),
**characterised in that** the axis of rotation (6c) of the intermediate member(6), as considered in said spanned plane, is inclined relative to the vehicle vertical axis such that the articulation (APa, APb, AB) of the steering arm (1a, 1b) on the intermediate member (6) is, as considered in the vehicle transverse direction, situated closer to the vehicle central plane than the point of intersection (KL) of the axis of rotation (6c) of the intermediate member (6) with a straight line which runs through the vehicle-body-side articulation point (SP) of the tie rod (5) and the centre of the joint (7) between the tie rod (5) and the intermediate member (6).

2. A wheel suspension according to claim 1, wherein the axis of rotation (6c) of the intermediate member (6), as considered in the aforesaid spanned plane, is inclined relative to the vehicle vertical axis by an angle in the order of from 30é to 80é.

3. A wheel suspension according to claim 1 or 2, wherein the intermediate member(6) is connected to the wheel carrier(1) via two steering arms (1a, 1b) so as to be rotatable relative thereto.

4. A wheel suspension according to claim 3, wherein the intermediate member (6) comprises a hollow-cylindrical housing (6a) with a transmission shaft (6d) describing said axis of rotation (6c), which transmission shaft is connected to the steering arm (1a, 1b) of the wheel carrier(1).

5. A wheel suspension according to claim 1 or 2, wherein a bearing block (6b) of the intermediate member (6) comprising the joint (7) between the tie rod (5) and the intermediate member (6) surrounds the steering arm(1a) and carries a transmission shaft(6d) connected to the steering arm (1a) and describing said axis of rotation (6c).

6. A wheel suspension according to any one of the preceding claims, wherein the wheel carrier(1) is guided by at least one wheel-guiding link (3, 4).

## Revendications

1. Suspension de roue (1) pour une roue directrice d'un véhicule à deux voies comportant un support de roue guidé de manière pivotante par rapport au châssis du véhicule autour de l'axe de direction par une barre d'accouplement (5) coopérant avec le levier de direction (1a, 1b) du support de roue (1) en étant relié en coopération avec celui-ci et en étant aligné au moins sensiblement dans la direction transversale du véhicule,
le segment d'extrémité de la barre de direction (5) du côté du support de roue (1) est relié par une articulation (7) permettant un mouvement vertical d'extension et de compression du support de roue (1) par rapport au châssis, avec un organe intermédiaire (6) formant un axe de rotation (6c), cet axe de rotation (6c) soutendant un plan avec le point d'articulation (SP) côté châssis du véhicule de la barre d'accouplement (5) ce plan étant incliné par rapport à l'axe vertical du véhicule d'un angle compris entre +/-45° et le levier de direction (1a, 1b) étant fixé à l'organe intermédiaire (6) de manière pivotante autour de l'axe de rotation (6c), à une certaine distance de l'articulation (7),
**caractérisée en ce que**
l'axe de rotation (6c) de l'organe intermédiaire (6) est incliné dans ce plan soutendu, par rapport à l'axe vertical du véhicule de façon que l'articulation (APa, APb, AB) du levier de direction (1a, 1b) sur l'organe intermédiaire (6) considéré dans la direction transversale du véhicule soit plus près du plan médian du véhicule que le point d'intersection (KL) de l'axe de rotation (6c) de l'organe intermédiaire (6) et d'une droite passant par le point d'articulation (SP) côté châssis du véhicule de la barre d'accouplement (5) et par le centre de l'articulation (7) entre la barre d'accouplement (5) et l'organe intermédiaire (6).

2. Suspension de roue selon la revendication 1,
dans laquelle l'axe de rotation (6c) de l'organe intermédiaire (6) est incliné d'un angle de l'ordre de 30° à 80° par rapport à l'axe vertical du véhicule dans le plan soutendu.

3. Suspension de roue selon la revendication 1 ou 2,
dans laquelle l'organe intermédiaire (6) est relié au support de roue (1) par deux leviers de direction (1a, 1b) de façon à pouvoir tourner par rapport à celui-ci.

4. Suspension de roue selon la revendication 3,
dans laquelle l'organe intermédiaire (6) a un boîtier (6a) en forme de cylindre creux avec un axe de transmission (6d) correspondant à cet axe de rotation (6c), cet axe de transmission étant relié au levier de direction (1a, 1b) du support de roue (1).

5. Suspension selon la revendication 1 ou 2,
dans laquelle un bloc palier (6b) de l'organe intermédiaire (6) comportant l'articulation (7) reliant la barre d'accouplement (5) et l'organe intermédiaire (6), entoure le levier de direction (1a), porte un axe de transmission (6d) relié au levier de direction (1a) et correspond à l'axe de rotation (6c).

6. Suspension selon l'une des revendications précédentes,
dans laquelle le support de roue (1) est guidé par au moins un bras (3, 4) de guidage de roue.
